# EUROPEAN PATENT APPLICATION

(11) **EP 4 711 874 A1**
(43) Date of publication of application: **18.03.2026**
(21) Application number: 24896015.5
(22) Date of filing: 09.10.2024
(51) Int. Cl.: G05B 23/02

(54) **VEHICLE DIAGNOSIS METHOD, AND APPARATUS**

(30) Priority: 29.11.2023 CN 202311614598
(71) Applicant: Shenzhen Yinwang Intelligent Technologies Co., Ltd., Shenzhen, Guangdong 518110 (CN)
(72) Inventor: YANG, Bo, Shenzhen, Guangdong 518129 (CN); LV, Tao, Shenzhen, Guangdong 518129 (CN)
(74) Representative: Thun, Clemens
(86) International application number: PCT/CN2024/123671
(87) International publication number: WO 2025/112921

(57) **Abstract**

A vehicle diagnostic method and apparatus are disclosed. The method is applied to a vehicle including at least one component. The at least one component includes at least one domain controller unit. The method includes: A first domain controller unit in the at least one domain controller unit receives a diagnostic instruction from a server (S1001), where the diagnostic instruction is used to initiate diagnostic on a to-be-diagnosed component, and the to-be-diagnosed component is one or more of the at least one component included in the vehicle; and then, the first domain controller unit obtains to-be-diagnosed data for the to-be-diagnosed component based on the diagnostic instruction (S1002), where the to-be-diagnosed data is used to diagnose the to-be-diagnosed component. The method can resolve a problem that it is difficult to diagnose a software fault, a performance reliability problem, and the like of a domain controller unit in the vehicle by reading a trouble code, a data stream, and the like, thereby implementing diagnostic on the domain controller unit in the vehicle.

## Description

This application claims priority to Chinese Patent Application No. 202311614598.9, filed with the China National Intellectual Property Administration on November 29, 2023, and entitled "VEHICLE DIAGNOSTIC METHOD AND APPARATUS", which is incorporated herein by reference in its entirety.

### TECHNICAL FIELD

This application relates to the field of vehicle technologies, and in particular, to a vehicle diagnostic method and apparatus.

### BACKGROUND

With continuous popularization and development of network connection technologies, remote diagnostic is gradually applied to vehicle diagnostic, thereby improving convenience of diagnostic, and operation and maintenance. Remote diagnostic is a manner in which a cloud server simulates a diagnostic instrument to perform basic operations such as reading a trouble code and a data stream of a vehicle, to implement diagnostic and maintenance of the vehicle. The trouble code and the data stream carry only a small amount of information when a hardware fault occurs. Therefore, a hardware fault of a conventional electronic control unit (electronic control unit, ECU) component in the vehicle can be determined through diagnostic in this manner.

With continuous development of an automotive electronic and electrical architecture, the vehicle has evolved from a conventional distributed architecture centered on the ECU component to a regional central architecture centered on a domain controller unit. Compared with the conventional ECU component, the domain controller unit is more likely to have software-type faults such as software faults and performance reliability problems. However, it is difficult to diagnose these software-type faults by reading the trouble code, the data stream, and the like.

### SUMMARY

This application provides a vehicle diagnostic method and apparatus, to resolve a problem that it is difficult to diagnose a software fault, a performance reliability problem, and the like of a domain controller unit in a vehicle by reading a trouble code, a data stream, and the like, so as to implement diagnostic on the domain controller unit in the vehicle.

To achieve the foregoing objectives, the following technical solutions are used in this application.

According to a first aspect, a vehicle diagnostic method is provided. The method is applied to a vehicle including at least one component, and the at least one component includes at least one domain controller unit. The method includes: A first domain controller unit receives a diagnostic instruction from a server, where the first domain controller unit belongs to the at least one domain controller unit, the diagnostic instruction is used to initiate diagnostic on a to-be-diagnosed component, and the to-be-diagnosed component is one or more of the at least one component; and the first domain controller unit obtains to-be-diagnosed data for the to-be-diagnosed component based on the diagnostic instruction, where the to-be-diagnosed data is used to diagnose the to-be-diagnosed component.

Based on the foregoing technical solution, the domain controller unit in the vehicle may receive, from the server, the diagnostic instruction used to initiate diagnostic on the to-be-diagnosed component in the vehicle, and then the domain controller unit may obtain the to-be-diagnosed data for the to-be-diagnosed component based on the diagnostic instruction. The to-be-diagnosed data may be used to diagnose the to-be-diagnosed component. For example, the to-be-diagnosed component may be a domain controller unit. In this way, data used to diagnose the domain controller unit can be obtained, and then the domain controller unit can be diagnosed. This enables diagnosis of the domain controller unit in the vehicle, resolving problems that it is difficult to diagnose a software fault, a performance reliability problem, and the like of the domain controller unit in the vehicle by reading a trouble code, a data stream, and the like.

In a possible design, the first domain controller unit has a diagnostic function, and the diagnostic instruction instructs the first domain controller unit to initiate diagnostic on the vehicle. That the first domain controller unit obtains the to-be-diagnosed data for the to-be-diagnosed component based on the diagnostic instruction includes: The first domain controller unit receives a diagnostic task from the server based on the diagnostic instruction; and the first domain controller unit obtains the to-be-diagnosed data based on the diagnostic task. In view of this design, when the first domain controller unit can diagnose the vehicle, after receiving the diagnostic instruction from the server, the first domain controller unit determines, based on the diagnostic instruction, to initiate diagnostic on the vehicle, further receives the diagnostic task from the server based on the diagnostic instruction, and determines specific to-be-obtained data based on the diagnostic task. The data may be used to diagnose a component like the domain controller unit in the vehicle. This enables diagnosis of the domain controller unit in the vehicle, resolving problems that it is difficult to diagnose a software fault, a performance reliability problem, and the like of the domain controller unit in the vehicle by reading a trouble code, a data stream, and the like.

In a possible design, the diagnostic task carries one or more of an identifier of the to-be-diagnosed component, a to-be-diagnosed indicator item, a diagnostic type, an identifier of a diagnostic procedure, and a time period in which to-be-diagnosed data is located. In view of this design, the diagnostic task carries various information such as the identifier of the to-be-diagnosed component, the to-be-diagnosed indicator item, the diagnostic type, the identifier of the diagnostic procedure, and the time period in which the to-be-diagnosed data is located. Therefore, the first domain controller unit can determine, based on the diagnostic task, a specific component to be diagnosed, specific to-be-diagnosed data to be obtained, and a diagnostic procedure to be used for diagnostic, and further performs a diagnostic operation based on the diagnostic task. In this way, the software fault, the performance reliability problem, and the like of the domain controller unit in the vehicle can be diagnosed.

In a possible design, after the first domain controller unit obtains the to-be-diagnosed data based on the diagnostic task, the method further includes: The first domain controller unit diagnoses the to-be-diagnosed component based on the diagnostic task and the to-be-diagnosed data; and the first domain controller unit sends a diagnostic result to the server. In view of this design, the domain controller unit in the vehicle diagnoses the component (for example, the domain controller unit) in the vehicle based on the diagnostic task, the to-be-diagnosed data, and the like, so that the software fault, the performance reliability problem, and the like of the domain controller unit in the vehicle can be diagnosed.

In a possible design, the diagnostic type corresponds to the diagnostic procedure represented by the identifier of the diagnostic procedure. In this way, different diagnostic types (for example, user experience-type fault diagnostic, scenario-type fault diagnostic, and log-type fault diagnostic) may correspond to different diagnostic procedures. In other words, different diagnostic procedures may be used to diagnose different types of faults, so that a cause of a fault can be more accurately determined through diagnostic.

In a possible design, the diagnostic type is used to determine whether human-machine interaction is required in a process of diagnosing the to-be-diagnosed component. In view of this design, the first domain controller unit may determine, based on the diagnostic type, whether human-machine interaction is required in the process of diagnosing the to-be-diagnosed component. For example, if it is determined that human-machine interaction is required, the first domain controller unit may interact with a user through a human-machine interaction port, to more accurately determine the cause of the fault. If it is determined that human-machine interaction is not required, the first domain controller unit may not interact with a user. In this way, the user may not be disturbed, and device power consumption can be reduced.

In a possible design, an intelligent diagnostic application is deployed on the first domain controller unit, and the intelligent diagnostic application is used to implement the diagnostic function. In view of this design, the diagnostic function of the domain controller unit can be implemented by deploying the intelligent diagnostic application on the domain controller unit, so that the domain controller unit can diagnose the component in the vehicle.

In a possible design, after the first domain controller unit obtains the to-be-diagnosed data for the to-be-diagnosed component based on the diagnostic instruction, the method further includes: The first domain controller unit sends the to-be-diagnosed data to the server, where the to-be-diagnosed data is used by the server to diagnose the to-be-diagnosed component. In view of this design, the domain controller unit sends the obtained to-be-diagnosed data to the server, and the server diagnoses the component in the vehicle based on the to-be-diagnosed data. In this way, the vehicle end needs to perform only a data upload operation, and does not need to perform a diagnostic operation. This can simplify development on the vehicle end. In addition, the server has more sufficient computing power, so that diagnostic efficiency is higher, and a diagnostic effect is better.

In a possible design, the first domain controller unit is the to-be-diagnosed component. In view of this design, when the server performs a diagnostic operation, the to-be-diagnosed domain controller unit may directly send the to-be-diagnosed data for the to-be-diagnosed domain controller unit to the server, so that the domain controller unit can be diagnosed. In this way, the domain controller unit on the vehicle end needs to perform only a data upload operation. This can simplify development of the domain controller unit.

In a possible design, the diagnostic instruction carries one or more of the identifier of the to-be-diagnosed component, the to-be-diagnosed indicator item, and the time period in which the to-be-diagnosed data is located. In view of this design, when the server performs the diagnostic operation, the server may directly use the diagnostic instruction to carry the identifier of the to-be-diagnosed component, the to-be-diagnosed indicator item, the time period in which the to-be-diagnosed data is located, and the like, to notify the vehicle end of specific data of a specific component to be uploaded, and does not need to notify the vehicle end by delivering the diagnostic task. This can make development simpler.

In a possible design, that the first domain controller unit receives the diagnostic instruction from the server includes: The first domain controller unit receives the diagnostic instruction from the server based on an MQTT protocol. In view of this design, the first domain controller unit may directly communicate with the server, and receive the diagnostic instruction from the server.

In a possible design, that the first domain controller unit receives the diagnostic instruction from the server includes: A second domain controller unit receives the diagnostic instruction from the server based on the MQTT protocol, where the second domain controller unit belongs to the at least one domain controller unit, and the second domain controller unit is different from the first domain controller unit; and the second domain controller unit sends the diagnostic instruction to the first domain controller unit. In view of this design, the first domain controller unit may receive the diagnostic instruction from the server through another domain controller unit.

In a possible design, the to-be-diagnosed data includes at least one type of a CAN snapshot, a log file, and a trouble code. In this way, the to-be-diagnosed data for the domain controller unit, for example, the CAN snapshot and the log file, is collected, and the software fault, the performance reliability problem, and the like of the domain controller unit can be diagnosed by analyzing the files. For example, if the domain controller unit of the vehicle has a problem of slow internet access, it is determined, through analysis by collecting the CAN snapshot, the log file, and the like that include various information such as a network rate, a network standard, and a chip parameter of the domain controller unit, that slow internet access is caused by parameter setting. In this way, a specific cause of slow internet access can be determined through diagnostic.

In a possible design, the log file includes a dotting log, the dotting log is used to record information about a fault event that occurs in a software system of the to-be-diagnosed component in a running process, and the dotting log uses a preset encapsulation format. In view of this design, the dotting log is used to record the fault event, and the dotting log uses a unified format. In this way, the dotting log can be quickly analyzed, so that diagnostic can be more efficiently completed, and diagnostic efficiency can be improved.

In a possible design, the preset encapsulation format includes a first field, a second field, a third field, and a fourth field, the first field is used to store the identifier of the to-be-diagnosed component, the second field is used to store an identifier of the dotting log, the third field is used to store occurrence time of the fault event, and the fourth field is used to store the fault event. In this way, the preset encapsulation format uses a JSON structure, so that when the vehicle is diagnosed, operation and maintenance personnel can easily understand and analyze the to-be-diagnosed data.

In a possible design, the domain controller unit includes one or more of a CDC, an MDC, a VDC, and a T-Box.

According to a second aspect, a vehicle diagnostic method is provided. The method is applied to a server, and includes: The server generates a diagnostic instruction, where the diagnostic instruction is used to initiate diagnostic on a to-be-diagnosed component included in a vehicle, the vehicle includes at least one component, and the to-be-diagnosed component is one or more of the at least one component; and the server sends the diagnostic instruction to a first domain controller unit, where the at least one component includes at least one domain controller unit, and the first domain controller unit belongs to the at least one domain controller unit.

In a possible design, after the server sends the diagnostic instruction to the first domain controller unit, the method further includes: The server sends a diagnostic task to the first domain controller unit based on the diagnostic instruction, where the diagnostic task is used to obtain to-be-diagnosed data for the to-be-diagnosed component, and the to-be-diagnosed data is used to diagnose the to-be-diagnosed component.

In a possible design, the diagnostic task carries one or more of an identifier of the to-be-diagnosed component, a to-be-diagnosed indicator item, a diagnostic type, an identifier of a diagnostic procedure, and a time period in which to-be-diagnosed data is located.

In a possible design, after the server sends the diagnostic task to the first domain controller unit based on the diagnostic instruction, the method further includes: The server receives a diagnostic result from the first domain controller unit.

In a possible design, the diagnostic type corresponds to the diagnostic procedure represented by the identifier of the diagnostic procedure.

In a possible design, the diagnostic type is used to determine whether human-machine interaction is required in a process of diagnosing the to-be-diagnosed component.

In a possible design, the server has a diagnostic function. After the server sends the diagnostic task to the first domain controller unit based on the diagnostic instruction, the method further includes: The server receives the to-be-diagnosed data from the first domain controller unit; and the server diagnoses the to-be-diagnosed component based on the to-be-diagnosed data.

In a possible design, an intelligent diagnostic application is deployed on the server, and the intelligent diagnostic application is used to implement the diagnostic function.

In a possible design, the first domain controller unit is the to-be-diagnosed component.

In a possible design, the diagnostic instruction carries one or more of the identifier of the to-be-diagnosed component, the to-be-diagnosed indicator item, and the time period in which the to-be-diagnosed data is located.

In a possible design, the to-be-diagnosed data includes at least one type of a CAN snapshot, a log file, and a trouble code.

In a possible design, the log file includes a dotting log, the dotting log is used to record information about a fault event that occurs in a software system of the to-be-diagnosed component in a running process, and the dotting log uses a preset encapsulation format.

In a possible design, the preset encapsulation format includes a first field, a second field, a third field, and a fourth field, the first field is used to store the identifier of the to-be-diagnosed component, the second field is used to store an identifier of the dotting log, the third field is used to store occurrence time of the fault event, and the fourth field is used to store the fault event.

In a possible design, the domain controller unit includes one or more of a CDC, an MDC, a VDC, and a T-Box.

According to a third aspect, a vehicle diagnostic apparatus is provided. The apparatus has a function of implementing the method according to any one of the designs of the first aspect or the second aspect. The function may be implemented by using hardware, or may be implemented by hardware executing corresponding software. The hardware or the software includes one or more modules corresponding to the function. In a possible example, the vehicle diagnostic apparatus includes a communication unit (or referred to as a communication module) and a processing unit (or referred to as a processing module). The communication unit is configured to perform a communication operation in the method according to any one of the designs of the first aspect or the second aspect. The processing unit is configured to perform a processing operation in the method according to any one of the designs of the first aspect or the second aspect.

According to a fourth aspect, a vehicle diagnostic apparatus is provided. The vehicle diagnostic apparatus includes a processor and a memory. The memory is coupled to the processor. The memory is configured to store computer program code. The computer program code includes computer instructions. The processor reads the computer instructions from the memory, so that the vehicle diagnostic apparatus performs the method according to any one of the designs of the first aspect or the second aspect.

In a possible design, the vehicle diagnostic apparatus further includes a communication interface, and the communication interface may be used by the vehicle diagnostic apparatus to communicate with another apparatus. For example, the communication interface may be a transceiver, an input/output interface, an interface circuit, an output circuit, an input circuit, a pin, a related circuit, or the like.

In a possible design, the vehicle diagnostic apparatus further includes an input/output device (for example, a display or an audio device). The input/output device may be used by the vehicle diagnostic apparatus to perform an input/output operation.

According to a fifth aspect, a computer-readable storage medium is provided. The computer-readable storage medium includes a computer program. When the computer program is run on a vehicle diagnostic apparatus, the vehicle diagnostic apparatus is enabled to perform the method according to any one of the designs of the first aspect or the second aspect.

According to a sixth aspect, a computer program product is provided. The computer program product includes a computer program or instructions. When the computer program or the instructions are run on a computer, the computer is enabled to perform the method according to any one of the designs of the first aspect or the second aspect.

According to a seventh aspect, a chip system is provided, including at least one processor and at least one interface circuit. The at least one interface circuit is configured to: perform a transceiver function, and send instructions to the at least one processor. When the at least one processor executes the instructions, the at least one processor is enabled to perform the method according to any one of the designs of the first aspect or the second aspect.

According to an eighth aspect, a communication system is provided. The communication system includes a vehicle and a server. The vehicle includes the vehicle diagnostic apparatus according to the third aspect or the fourth aspect.

It should be noted that, for technical effects brought by any design of the second aspect to the eighth aspect, refer to technical effects brought by a corresponding design of the first aspect. Details are not described herein again.

### BRIEF DESCRIPTION OF DRAWINGS

FIG. 1 is a diagram of an architecture of a communication system according to an embodiment of this application;
FIG. 2 is a diagram of structures of a first device and a second device according to an embodiment of this application;
FIG. 3 is a diagram of other structures of a first device and a second device according to an embodiment of this application;
FIG. 4 is a diagram of other structures of a first device and a second device according to an embodiment of this application;
FIG. 5 is a diagram of other structures of a first device and a second device according to an embodiment of this application;
FIG. 6 is a diagram of other structures of a first device and a second device according to an embodiment of this application;
FIG. 7 is a diagram of other structures of a first device and a second device according to an embodiment of this application;
FIG. 8 is a diagram of other structures of a first device and a second device according to an embodiment of this application;
FIG. 9 is a diagram of a structure of an intelligent diagnostic application according to an embodiment of this application;
FIG. 10 is a schematic flowchart of a vehicle diagnostic method according to an embodiment of this application;
FIG. 11(1) to FIG. 11(3) are a diagram of a group of interfaces of a mobile phone according to an embodiment of this application;
FIG. 12 is a diagram of a structure of a dotting log according to an embodiment of this application;
FIG. 13 is a schematic flowchart of another vehicle diagnostic method according to an embodiment of this application;
FIG. 14 is a schematic flowchart of another vehicle diagnostic method according to an embodiment of this application;
FIG. 15 is a diagram of a structure of a vehicle diagnostic apparatus according to an embodiment of this application; and
FIG. 16 is a diagram of a structure of another vehicle diagnostic apparatus according to an embodiment of this application.

### DESCRIPTION OF EMBODIMENTS

To clearly describe technical solutions in embodiments of this application, terms such as "first" and "second" are used in the embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Vehicle diagnostic is one of common technical means in the field of fault locating in the vehicle industry. A diagnostic instrument is a widely used vehicle diagnostic instrument. The diagnostic instrument may be connected to an on-board diagnostics (on-board diagnostics, OBD) system of a vehicle through a vehicle communication interface (vehicle communication interface, VCI) to provide various functions such as reading a diagnostic trouble code (diagnostic trouble code, DTC), reading vehicle version information, reading a data identifier (Data Identifier, DID) of a data stream, rectifying a trouble code, and flashing software, thereby implementing daily diagnostic and maintenance of the vehicle. A trouble code and a maintenance suggestion for a faulty component in the vehicle may be learned by reading the DTC. Software and hardware version information of a component in the vehicle may be learned by reading the vehicle version information, to determine whether version flashing is required. A key information parameter of the component in the vehicle may be learned by reading the DID of the data stream. Fault information of the component in the vehicle may be eliminated by rectifying the trouble code.

With continuous popularization and development of network connection technologies, remote diagnostic is gradually applied to vehicle diagnostic to improve convenience of diagnostic, and operation and maintenance. Remote diagnostic is a manner in which a cloud server simulates a diagnostic instrument to perform basic operations such as remotely reading vehicle information, reading a vehicle trouble code, reading a frozen frame, rectifying a trouble code, reading a component trouble code, and reading a component data stream, to diagnose and maintain the vehicle.

Currently, both remote diagnostic provided by the cloud server and a diagnostic manner provided by the diagnostic instrument are unified diagnostic services (unified diagnostic services, UDS) diagnostic capabilities implemented according to an International Organization for Standardization (International Organization for Standardization, ISO) 14229-1 specification. Diagnostic databases used in remote diagnostic provided by the cloud server and the diagnostic manner provided by the diagnostic instrument are open diagnostic data exchange (open diagnostic data exchange, ODX) diagnostic databases. The ODX diagnostic database is a diagnostic database used by a standard diagnostic instrument developed by an association for standardisation of automation and measuring systems (association for standardisation of automation and measuring systems, ASAM). In a vehicle development process, a vehicle manufacturer defines an ODX diagnostic database of a component in the vehicle, and then releases the ODX diagnostic database to a manufacturer of the cloud server or the diagnostic instrument. The corresponding manufacturer develops the cloud server or the diagnostic instrument based on the ODX diagnostic database defined by the vehicle manufacturer. In a vehicle lifecycle, the cloud server or the diagnostic instrument may diagnose the component in the vehicle based on the ODX diagnostic database.

In the foregoing diagnostic manner, the read trouble code and the read data stream carry only a small amount of information when a hardware fault occurs. Therefore, a fault of a conventional ECU component in the vehicle can be diagnosed in the manner. With continuous development of an automotive electronic and electrical architecture, the vehicle has evolved from a conventional distributed architecture centered on the ECU component to a regional central architecture centered on a domain controller unit (domain controller unit, DCU). In the distributed architecture centered on the ECU component, each ECU usually controls a single functional unit, and ECUs are independent of each other. For example, different ECUs control components such as an engine, a brake, and a vehicle door. The ECUs may be connected to each other through a controller area network (controller area network, CAN) bus, a local interconnect network (local interconnect network, LIN) bus, or the like for communication.

As applications of vehicle electronic and electrical products increase, a quantity of ECUs gradually increases. To reduce vehicle costs, the regional central architecture centered on the domain controller unit emerges. The domain controller unit may divide functions of parts of the vehicle into several domains such as a powertrain domain and a body electronic domain, and then centrally control, through a multi-core central processing unit (central processing unit, CPU) or a graphics processing unit (Graphics Processing Unit, GPU) with a powerful processing capability, functions that originally belong to the ECUs in the domains. The domain controller unit is no longer a simple single-chip microcomputer or an embedded system, but a highly intelligent high-performance computer (high-performance computer, HPC) on which a complex operating system and application software run, to implement high-computing-power application such as network connection, an intelligent cockpit, intelligent vehicle control, and intelligent driving.

In the distributed architecture centered on the domain controller unit, a fault problem of the domain controller unit mainly includes a hardware fault, a software fault, a performance reliability problem, and the like. The hardware fault of the domain controller unit may be diagnosed in the foregoing diagnostic manner. However, it is difficult to diagnose the software fault, the performance reliability problem, and the like of the domain controller unit in the foregoing manner of reading the trouble code, the data stream, or the like. For example, if the domain controller unit of the vehicle has a problem of slow internet access, and if hardware of the domain controller unit is not faulty, only the hardware being not faulty can be detected by reading the trouble code and the data stream, but a cause of slow internet access cannot be diagnosed.

In view of this, an embodiment of this application provides a vehicle diagnostic method. An intelligent diagnostic application is preset to implement remote diagnostic on a domain controller unit in a vehicle, to resolve a problem that it is difficult to diagnose a software fault, a performance reliability problem, and the like of the domain controller unit by reading a trouble code, a data stream, or the like.

The technical solutions provided in embodiments of this application may be applied to various scenarios in which an intelligent component is diagnosed. For example, in the field of vehicle diagnostic, the domain controller unit and a conventional ECU in the vehicle are diagnosed. In the field of internet of things diagnostic, an HPC with strong computing power is diagnosed.

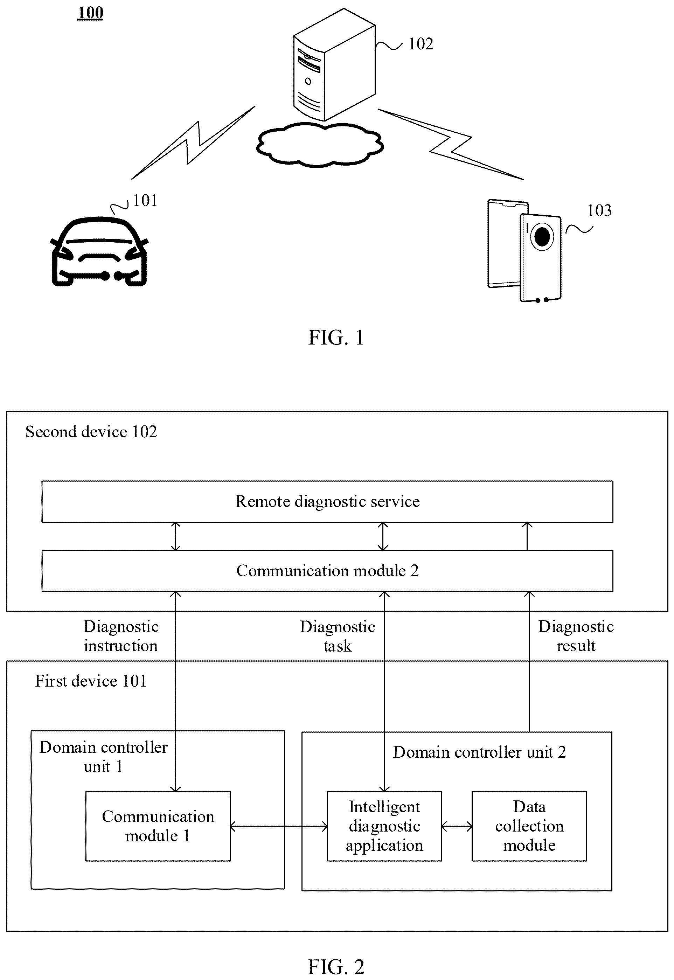

For example, FIG. 1 is a diagram of an architecture of a communication system to which a vehicle diagnostic method is applied according to an embodiment of this application. As shown in FIG. 1, the communication system 100 includes a first device 101 and a second device 102.

The first device 101 is a diagnosed device. For example, the first device 101 may be various devices such as a vehicle, an artificial intelligence (artificial intelligence, AI) device (for example, including but not limited to a robot and a mechanical dog), and an uncrewed aerial vehicle. In FIG. 1, the first device 101 is shown as a vehicle. In some embodiments, one or more domain controller units are installed in the first device 101, and the second device 101 may initiate diagnostic on the domain controller units, to determine software faults, performance reliability problems, and the like of the domain controller units. For example, the domain controller unit may include but is not limited to one or more of a cockpit domain controller unit (cockpit domain controller unit, CDC), a vehicle domain controller unit (vehicle domain controller unit, VDC), a mobile data center (mobile data center, MDC), a telematics-box (Telematics-BOX, T-BOX), and the like.

The CDC is a domain controller unit configured to control an intelligent cockpit domain. The intelligent cockpit domain may integrate various information such as driving information and entertainment information based on a human-machine interaction scenario in a cockpit. For example, the intelligent cockpit domain includes but is not limited to a head-up display (head-up display, HUD) system, a dashboard (cockpit), an in-vehicle infotainment (in-vehicle Infotainment, IVI) system, and the like. The VDC is a domain controller unit configured to control a vehicle domain (or referred to as a body domain), a chassis domain, and the like. The vehicle domain mainly integrates body electronic components, for example, including but not limited to a light, a windscreen wiper, a central locking system, and the like. The chassis domain integrates a traveling-related function, for example, including but not limited to a drive system, a traveling system, a steering system, and a braking system. The MDC is a domain controller unit configured to control an autonomous driving domain. The autonomous driving domain integrates related functions for implementing autonomous driving, for example, including but not limited to environment sensing, positioning, path planning, decision control, and the like. The T-Box is a domain controller unit configured to control remote management, operation, and the like of a device. The T-Box may be used as a wireless gateway, to provide a remote communication interface for the device, and provide various services such as traveling trajectory recording and fault monitoring. It may be understood that each domain controller unit may have another name, and the name does not constitute a limitation on a function of the domain controller unit.

Optionally, one or more conventional ECUs may be further installed in the first device 101, and the second device 101 may also initiate diagnostic on these conventional ECUs.

The second device 102 may initiate remote diagnostic on the first device 101. For example, the second device 102 may be a server, and the server may be a device or a server that has a computing function, for example, a cloud server or a network server. The server may be one server, a server cluster including a plurality of servers, or a cloud computing service center.

In some embodiments, the communication system 100 shown in FIG. 1 may further include a third device 103. The third device 103 may be configured to: receive a user instruction, and send the received user instruction to the second device 102, so that the second device 102 can initiate diagnostic on the first device 101 based on the user instruction. In some embodiments, the third device 103 may further output (for example, display by using a display or broadcast by using a speaker) a diagnostic result of the first device x, so that a user can learn of the diagnostic result. For example, the third device 103 may be various devices such as a mobile phone, a tablet computer, a wearable device, an AI device, and a vehicle-mounted device. In FIG. 1, the third device 103 is shown as a mobile phone.

Optionally, the first device 101 and the second device 102, and/or the second device 102 and the third device 103 may communicate with each other by using a wired communication technology or a wireless communication technology. For example, the wireless communication technology includes but is not limited to at least one of the following: a 4th generation (4th generation, 4G) communication technology (for example, a long term evolution (long term evolution, LTE) technology), a worldwide interoperability for microwave access (worldwide interoperability for microwave access, WiMAX) communication technology, a 5th generation (5th generation, 5G) communication technology (for example, a new radio (new radio, NR) technology), and a future mobile communication technology, for example, a 6th generation (6th generation, 6G) mobile communication technology.

In some embodiments, the domain controller unit in the first device 101 has a diagnostic function. The diagnostic function may be used to diagnose the one or more domain controller units included in the first device 101. In other words, the first device 101 may perform an operation of diagnosing the domain controller unit. Optionally, the diagnostic function may be further used to diagnose the one or more conventional ECUs included in the first device 101. Optionally, the diagnostic function may be implemented by using an intelligent diagnostic application (or referred to as a first application, or referred to as an intelligent diagnostic module, or the like) deployed on the domain controller unit.

It may be understood that the intelligent diagnostic application in this embodiment of this application may be an application, a software module, a chip, a component, or the like.

In some embodiments, intelligent diagnostic applications may be deployed on all the domain controller units included in the first device 101. In other words, the intelligent diagnostic application may be deployed on each domain controller unit included in the first device 101. The intelligent diagnostic application deployed on each domain controller unit may be used to diagnose the domain controller unit in which the intelligent diagnostic application is deployed. In this way, diagnostic instructions do not need to be additionally exchanged between different domain controller units. This can reduce signaling overheads. Certainly, the intelligent diagnostic application deployed on each domain controller unit may be further used to diagnose a conventional ECU or a domain controller unit other than the domain controller unit in which the intelligent diagnostic application is deployed. This is not specifically limited in embodiments of this application.

In some other embodiments, intelligent diagnostic applications may be deployed on some domain controller units included in the first device 101. In other words, the intelligent diagnostic applications are deployed on only some domain controller units in the first device 101. These intelligent diagnostic applications may be used to diagnose all the domain controller units, the conventional ECUs, and the like included in the first device 101. For example, the first device 101 includes a domain controller unit A, a domain controller unit B, a domain controller unit C, and a domain controller unit D, and intelligent diagnostic applications are deployed on the domain controller unit A and the domain controller unit B. The intelligent diagnostic application deployed on the domain controller unit A may be used to diagnose the domain controller unit A and the domain controller unit C, and the intelligent diagnostic application deployed on the domain controller unit B may be used to diagnose the domain controller unit B and the domain controller unit D. Alternatively, the intelligent diagnostic application deployed on the domain controller unit A may be used to diagnose the domain controller unit C and the domain controller unit D, and the intelligent diagnostic application deployed on the domain controller unit B may be used to diagnose the domain controller unit A and the domain controller unit B. An intelligent diagnostic application specifically used to diagnose specific domain controller units, conventional ECUs, and the like is not specifically limited in this embodiment of this application.

In some other embodiments, the intelligent diagnostic application may be deployed on a domain controller unit included in the first device 101. In other words, only one intelligent diagnostic application may be deployed on the first device 101, and the intelligent diagnostic application may be used to diagnose all the domain controller units, the conventional ECUs, and the like included in the first device 101. In this way, complexity of deploying the intelligent diagnostic application can be reduced. In a specific implementation, the intelligent diagnostic application may be deployed on an intelligent cockpit. Because the intelligent cockpit has good computing power, large storage, and can interact with the user, deploying the intelligent diagnostic application in the intelligent cockpit can reduce development difficulty.

In this embodiment, FIG. 2 is a diagram of a structure of the first device 101 and the second device 102 according to an embodiment of this application.

As shown in FIG. 2, at least one domain controller unit, for example, a domain controller unit 1 and a domain controller unit 2 (only two domain controller units are shown in FIG. 2), is deployed on the first device 101.

A communication module 1 is deployed on the domain controller unit 1, and the communication module 1 may be configured to interact with the second device 102, to receive a diagnostic instruction from the second device 102. The diagnostic instruction may instruct an intelligent diagnostic application to initiate diagnostic on the first device 101. Further, the domain controller unit 1 may send the received diagnostic instruction to an intelligent diagnostic application in the domain controller unit 2, so that the intelligent diagnostic application can perform diagnostic based on the diagnostic instruction.

The intelligent diagnostic application is deployed on the domain controller unit 2, and the intelligent diagnostic application may be configured to diagnose all domain controller units included in the first device 101. The intelligent diagnostic application may receive the diagnostic instruction from the communication module 1, and diagnose the domain controller unit included in the first device 101 based on the diagnostic instruction. In some embodiments, the intelligent diagnostic application may receive a diagnostic task from the second device 102 based on the received diagnostic instruction, and diagnose a to-be-diagnosed domain controller unit included in the first device 102 based on the diagnostic task. Optionally, a connection may be established between the intelligent diagnostic application and the second device 102, and the intelligent diagnostic application may receive the diagnostic task from the second device 102 based on the established connection. For example, the intelligent diagnostic application may actively establish the connection to the second device 102 after receiving the diagnostic instruction, or the intelligent diagnostic application has established the connection to the second device 102 before receiving the diagnostic instruction. An occasion for establishing the connection is not limited in this embodiment of this application.

Optionally, the established connection may be a connection established based on a hypertext transfer protocol over secure socket layer (hypertext transfer protocol over secure socket layer, HTTPS). The second device 102 may send the diagnostic task to the first device 101 based on a representational state transfer (representational state transfer, REST) interface. Certainly, the established connection may alternatively be a connection established based on another protocol.

In some embodiments, a data collection module may be further deployed on the domain controller unit 2. The data collection module may be configured to: collect to-be-diagnosed data for the to-be-diagnosed domain controller unit based on the diagnostic task, and send the to-be-diagnosed data to the intelligent diagnostic application. The intelligent diagnostic application may diagnose the to-be-diagnosed domain controller unit based on the to-be-diagnosed data.

The second device 102 includes a remote diagnostic service, a communication module 2, and the like.

The remote diagnostic service may be configured to initiate diagnostic on the first device 101, for example, diagnostic on various components such as the domain controller unit and a conventional ECU included in the first device 101. In some embodiments, the remote diagnostic service may periodically or regularly initiate diagnostic on the first device 101. In some other embodiments, the remote diagnostic service may initiate diagnostic on the first device 101 based on an operation of operation and maintenance personnel, an instruction of the third device 103 shown in FIG. 1, or the like. An occasion for initiating diagnostic on the first device 101 by the remote service is not specifically limited in this embodiment of this application.

In some embodiments, the remote diagnostic service may be configured to: generate one or more of a diagnostic instruction and a diagnostic task, and send the diagnostic instruction, the diagnostic task, or the like to the first device 101, to implement diagnostic on the first device 101.

The communication module 2 may be configured to: receive the diagnostic instruction from the remote diagnostic service, and send the diagnostic instruction to the first device 101. In some embodiments, the communication module 2 may be further configured to: receive one or more of a diagnostic result, to-be-diagnosed data, and the like from the first device 101, and send the one or more of the diagnostic result, the to-be-diagnosed data, and the like to the remote diagnostic service.

It may be understood that FIG. 2 is described by using an example in which a domain controller unit that receives the diagnostic instruction is different from a domain controller unit on which the intelligent diagnostic application is deployed. In some other embodiments, the domain controller unit that receives the diagnostic instruction may be the same as the domain controller unit on which the intelligent diagnostic application is deployed. In this way, the diagnostic instruction does not need to be transferred between different domain controller units. This can reduce signaling overheads.

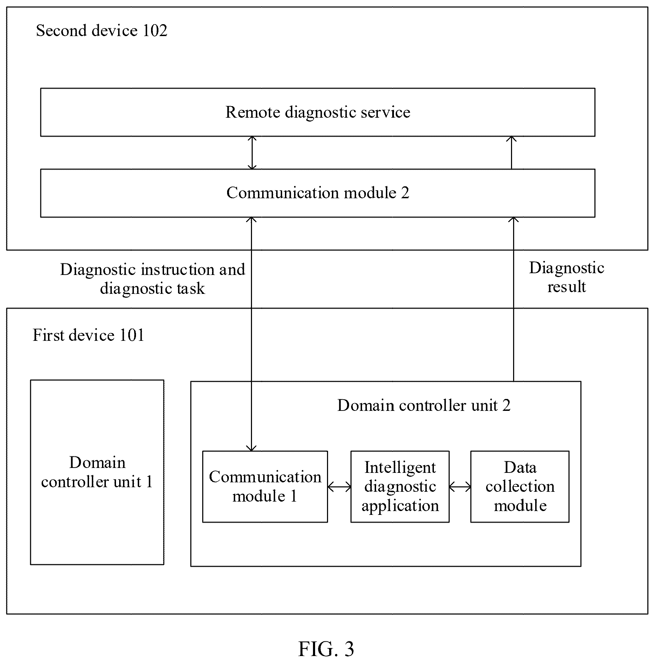

In this embodiment, FIG. 3 is a diagram of other structures of the first device 101 and the second device 102 according to an embodiment of this application. As shown in FIG. 3, both the communication module 1 and an intelligent diagnostic application are deployed on the domain controller unit 2. The domain controller unit 2 may directly receive a diagnostic instruction from the second device 102 through the communication module 1, and then send the diagnostic instruction to the intelligent diagnostic application. Correspondingly, the intelligent diagnostic application receives a diagnostic task from the second device 102 based on the diagnostic instruction, and diagnoses a domain controller unit in the first device 101 based on the diagnostic task. In this way, compared with the architecture shown in FIG. 2, in this architecture, the diagnostic instruction does not need to be transferred between the domain controller unit 1 and the domain controller unit 2. This can reduce signaling overheads. For descriptions of the modules shown in FIG. 3, refer to the descriptions of the corresponding modules shown in FIG. 2.

In some embodiments, the domain controller unit in the first device 101 may receive the diagnostic instruction from the second device 102 by using a message queuing telemetry transport (message queuing telemetry transport, MQTT) protocol. The MQTT protocol is a publish/subscribe-type communication protocol. A system architecture of the MQTT protocol includes an MQTT client and an MQTT server. An MQTT message includes two parts: a topic (topic) and a payload (payload). The MQTT client can register with or monitor a corresponding topic on the MQTT server.

In some embodiments, a naming rule of the topic in the MQTT message may be V1/${svcType}-${msgType}/${deviceID}, where "svcType" and "msgType" may be used to distinguish between different instruction types, and "deviceID" may be an identifier (identifier, ID) of the first device 101. The ID may be mapped to an internet protocol (Internet Protocol, IP) address, so that the second device 102 can find the first device 101.

The payload part may be used to carry body text of the MQTT message, and a parameter of a specific diagnostic instruction may be carried in the payload part in a data format like JSON.

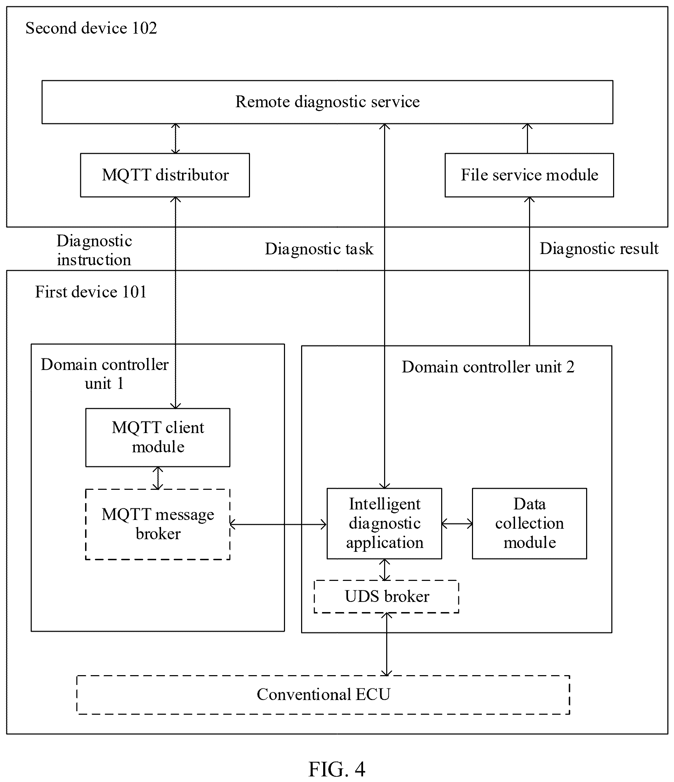

In this embodiment, with reference to the structure shown in FIG. 2, FIG. 4 is a diagram of other structures of the first device 101 and the second device 102 according to an embodiment of this application.

As shown in FIG. 4, the communication module 1 included in the first device 101 shown in FIG. 2 may include an MQTT client module. The MQTT client module may enable the domain controller unit 1 to serve as an MQTT client, to receive a diagnostic instruction from the second device 102 based on an MQTT protocol.

The communication module 2 included in the second device 102 shown in FIG. 2 may include an MQTT distributor and a file service module. The MQTT distributor may send the diagnostic instruction to the first device 101 based on the MQTT protocol. The file service module may receive one or more of a diagnostic result and to-be-diagnosed data from the first device 101.

In some embodiments, a protocol used by a domain controller unit may be different from the MQTT protocol. For example, the domain controller unit may use a scalable service-oriented middleware over IP (Scalable service-Oriented Middleware over IP, SOMEIP) protocol for communication. Therefore, as shown in FIG. 4, an MQTT message broker may be further deployed on the domain controller unit 1. The MQTT message broker may be configured to convert an MQTT packet into a packet of a format specified by a protocol used by the domain controller unit, for example, a SOMEIP packet or a packet in another format. The MQTT message broker may further send, to the intelligent diagnostic application, a diagnostic instruction obtained after a packet format is converted.

In some embodiments, as shown in FIG. 4, one or more conventional ECUs and a unified diagnostic services (unified diagnostic services, UDS) broker may be further deployed on the first device 101, and the intelligent diagnostic application may further diagnose these conventional ECUs. For example, after receiving a diagnostic task, if the intelligent diagnostic application determines, based on the diagnostic task, that the conventional ECU needs to be diagnosed, the intelligent diagnostic application may read a trouble code of the conventional ECU through the UDS broker, and diagnose the conventional ECU based on the trouble code.

For descriptions of other modules shown in FIG. 4, refer to the descriptions of the corresponding modules shown in FIG. 2.

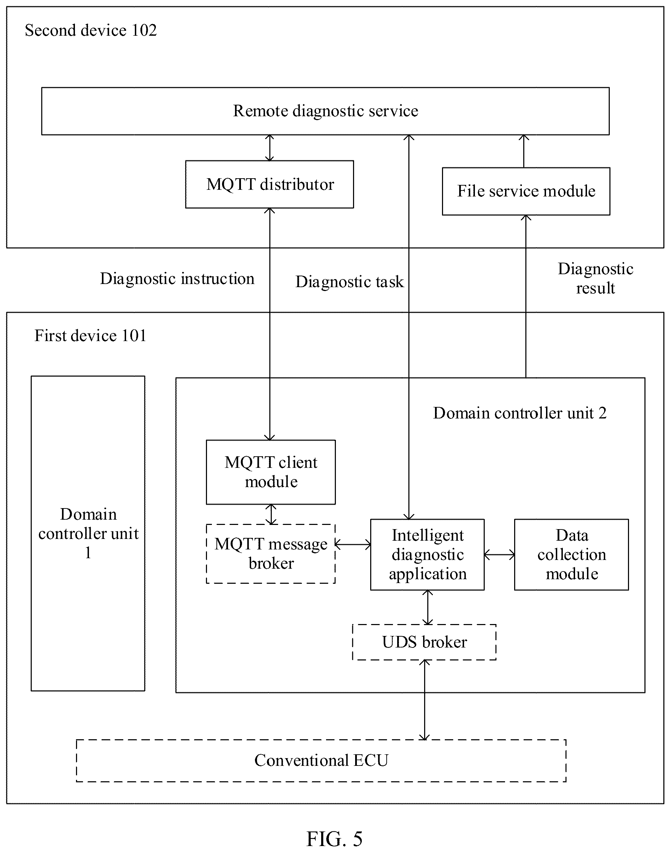

It may be understood that the structure shown in FIG. 4 is described by using the structure shown in FIG. 2 as an example. Similarly, with reference to the structure shown in FIG. 3, FIG. 5 is a diagram of other structures of the first device 101 and the second device 102 according to an embodiment of this application. As shown in FIG. 5, the communication module 1 shown in FIG. 3 may include an MQTT client module. The MQTT client module may enable the domain controller unit 2 to serve as an MQTT client, to receive a diagnostic instruction from the second device 102 based on an MQTT protocol. For descriptions of other modules shown in FIG. 5, refer to the descriptions of the corresponding modules shown in FIG. 3 and FIG. 4.

It may be understood that the foregoing embodiments are all described by using an example in which the first device 101 has a diagnostic function to perform a diagnostic operation. In some other embodiments, the second device 102 may have a diagnostic function. The diagnostic function may be used to diagnose one or more controllers, a conventional ECU, and the like that are included in the first device 101. In other words, the second device 102 may perform a diagnostic operation on a domain controller unit included in the first device 101. Optionally, the diagnostic function may be implemented by using an intelligent diagnostic application deployed on the second device 102.

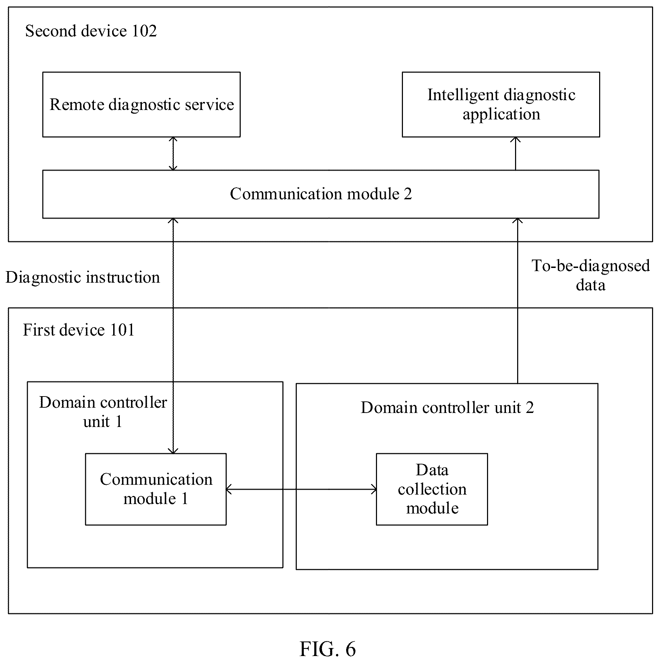

In this embodiment, FIG. 6 is a diagram of other structures of the first device 101 and the second device 102 according to an embodiment of this application.

As shown in FIG. 6, at least one domain controller unit, for example, a domain controller unit 1 and a domain controller unit 2 (only two domain controller units are shown in FIG. 6), is deployed on the first device 101.

A communication module 1 is deployed on the domain controller unit 1, and the communication module 1 may be configured to interact with the second device 102, to receive a diagnostic instruction from the second device 102. The diagnostic instruction may instruct to initiate diagnostic on a to-be-diagnosed domain controller unit. Further, the communication module 1 may send the received diagnostic instruction to the to-be-diagnosed domain controller unit, so that the to-be-diagnosed domain controller unit can send to-be-diagnosed data for the to-be-diagnosed domain controller unit to the second device 102 based on the diagnostic instruction.

For example, the to-be-diagnosed domain controller unit is the domain controller unit 2. A data collection module is deployed on the domain controller unit 2, and the domain controller unit 2 may collect to-be-diagnosed data for the domain controller unit 2 through the data collection module based on the diagnostic instruction from the communication module 1. Further, the domain controller unit 2 may upload the to-be-diagnosed data to the second device 102, so that the second device 102 can diagnose the domain controller unit 2 based on the to-be-diagnosed data.

Optionally, in this embodiment, each domain controller unit included in the first device 101 may have a function of receiving the diagnostic instruction from the communication module 1 and parsing the diagnostic instruction. The function may be implemented by using software, hardware, or a combination of software and hardware.

Optionally, in this embodiment, a data collection module may be further deployed on each domain controller unit included in the first device 101, so that after receiving the diagnostic instruction, each domain controller unit can collect to-be-diagnosed data for the domain controller unit through the data collection module based on the diagnostic instruction, to implement self-diagnostic. Alternatively, a data collection module may be deployed only on a domain controller unit or some domain controller units, and the data collection module may be configured to collect to-be-diagnosed data for a to-be-diagnosed domain controller unit and upload the to-be-diagnosed data to the second device 102.

It may be understood that the to-be-diagnosed data for the to-be-diagnosed domain controller unit may be collected and uploaded to the second device 102 by a data collection module of the to-be-diagnosed domain controller unit, or may be collected and uploaded to the second device 102 by a data collection module of a domain controller unit other than the to-be-diagnosed domain controller unit. This is not specifically limited in embodiments of this application.

The second device 102 includes a remote diagnostic service, a communication module 2, and an intelligent diagnostic application. The intelligent diagnostic application may be used to diagnose the domain controller unit included in the first device 101. In some embodiments, the intelligent diagnostic application may receive, from the first device 101, the to-be-diagnosed data for the to-be-diagnosed domain controller unit, diagnose the to-be-diagnosed domain controller unit based on the to-be-diagnosed data, and obtain a diagnostic result.

For descriptions of other modules shown in FIG. 6, refer to the descriptions of the corresponding modules shown in FIG. 2.

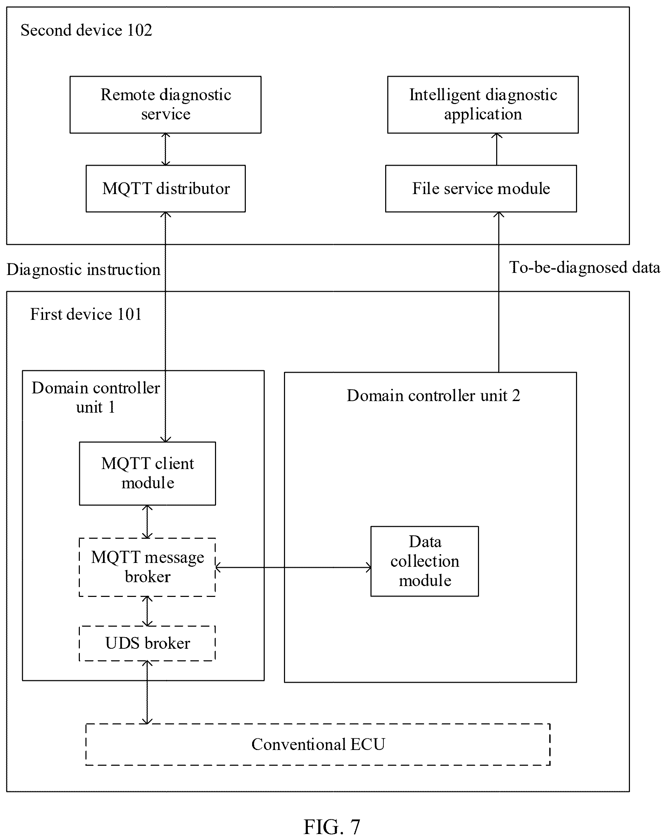

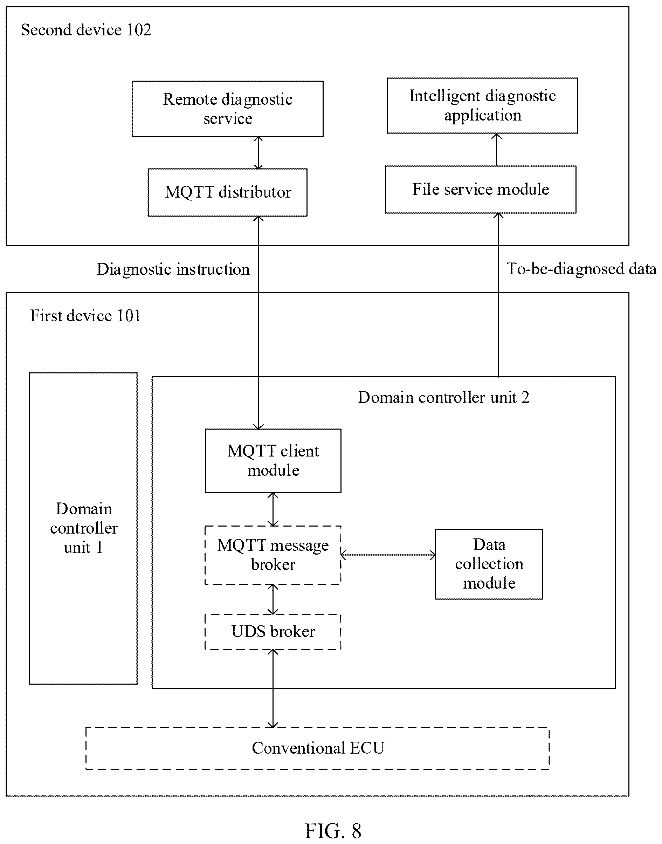

Similarly, similar to the structure shown in FIG. 3, in the structure shown in FIG. 6, the communication module 1 may alternatively be deployed on the domain controller unit 2. Further, similar to the structures shown in FIG. 4 and FIG. 5, the structure shown in FIG. 6 may also be presented in a form shown in FIG. 7 or FIG. 8. In the structures shown in FIG. 7 and FIG. 8, when the second device 102 diagnoses a conventional ECU, the second device 102 may send a diagnostic instruction to a UDS broker. Correspondingly, after receiving the diagnostic instruction, the UDS broker reads a trouble code of the conventional ECU based on the diagnostic instruction, and sends the read ECU trouble code to the second device 102.

It may be understood that, the structures shown in FIG. 7 and FIG. 8 are all described by using an example in which the MQTT client module and the UDS agent are deployed on a same domain controller unit. In another embodiment, the MQTT client module and the UDS agent may alternatively be deployed on different domain controller units. A location at which the UDS is deployed is not limited in this embodiment of this application. Optionally, the trouble code read by the UDS may be directly uploaded by the UDS to the second device 102, or may be forwarded by another apparatus to the second device 102.

For descriptions of the modules shown in FIG. 7 and FIG. 8, refer to the descriptions of the corresponding modules in FIG. 4, FIG. 5, FIG. 6, and the like.

Optionally, in the foregoing embodiment, when the intelligent diagnostic application is deployed on the second device 102, the second device 102 does not need to deliver a diagnostic task to the first device 101, and may directly use the diagnostic instruction to carry content in the diagnostic task. This can simplify development of the first device 101. Certainly, the second device 102 may also diagnose the first device 101 by delivering a diagnostic instruction and a diagnostic task. This is not limited in embodiments of this application.

It may be understood that the domain controller unit on which the communication module 1 described above is deployed is not specifically limited in this embodiment of this application. For example, the communication module 1 may be deployed on a T-Box, or may be deployed on a domain controller unit other than the T-Box. The structures shown in FIG. 2 to FIG. 8 are all described by using an example in which only one communication module 1 is deployed on the first device 101. A quantity of communication modules 1 is not specifically limited in this embodiment of this application. The communication modules 1 may alternatively be deployed on a plurality of domain controller units included in the first device 101.

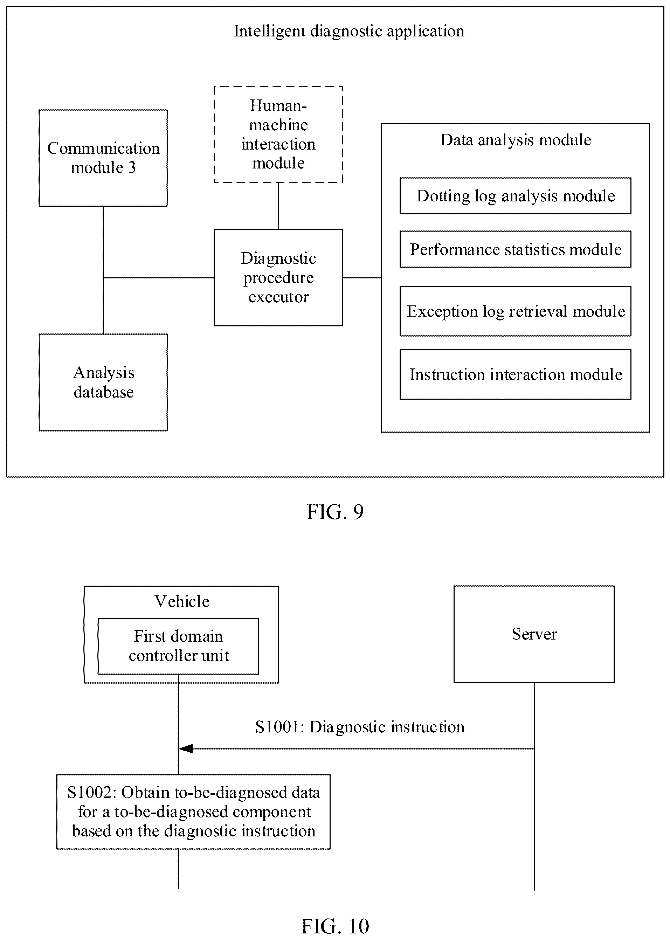

For example, an intelligent diagnostic application is deployed on the first device 101. FIG. 9 is a diagram of a structure of the intelligent diagnostic application according to an embodiment of this application.

As shown in FIG. 9, the intelligent diagnostic application includes a communication module 3, a diagnostic database, a diagnostic procedure executor, and a data analysis module.

The communication module 3 is configured to: receive a diagnostic instruction, and receive a diagnostic task from the second device 102 based on the diagnostic instruction. The communication module 3 may be further configured to upload one or more of a diagnostic result and to-be-diagnosed data to the second device 102.

The diagnostic database may be configured to store a diagnostic procedure from the second device 102. The diagnostic procedure stored in the diagnostic database may be synchronized with the diagnostic procedure in the second device 102. Optionally, the diagnostic procedure stored in the diagnostic database may be periodically obtained from the second device 102, or may be obtained from the second device 102 when the second device 102 triggers diagnostic on the first device 101. An occasion for obtaining the diagnostic procedure from the second device 102 is not specifically limited in this embodiment of this application.

The diagnostic procedure executor may obtain analysis data from the data analysis module based on the diagnostic procedure stored in the diagnostic database, and obtain a diagnostic result based on the analysis data.

The data analysis module may include one or more of a dotting log analysis module, a performance statistics module, an exception log retrieval module, an instruction interaction module, and the like. The dotting log analysis module may analyze a dotting log. The performance statistics module may perform statistical analysis based on the dotting log, to obtain a performance degradation point. The exception log retrieval module may be configured to search a system log, and search for exception information in the system log, for example, information such as an error and an alarm. The instruction interaction module may be configured to interact with components such as another domain controller unit or a conventional ECU included in the first device 101 by using various instructions such as an SOMEIP and a service-oriented vehicle diagnostics (service-oriented vehicle diagnostics, SOVD) protocol, to obtain trouble code information.

In some embodiments, the intelligent diagnostic application shown in FIG. 9 may further include a human-machine interaction module. If a human-machine interaction operation needs to be performed in a diagnostic process, the human-machine interaction module may provide a human-machine interaction port (for example, an interface or an audio module) to interact with a user, prompt the user to perform an operation, and record an operation result of the user, to diagnose the first device 101 based on the operation result of the user.

Optionally, when the intelligent diagnostic application is deployed on the second device 102, the intelligent diagnostic application may include more or fewer modules than those shown in FIG. 9, for example, may not include the human-machine interaction module, the instruction interaction module, or the like. Functions of the modules may be different. For example, when the intelligent diagnostic application is deployed on the second device 102, the communication module 3 may be configured to send at least one of a diagnostic instruction and a diagnostic task to the first device 101, or may be further configured to receive at least one of a diagnostic result and to-be-diagnosed data from the first device 101.

It may be understood that the structures shown in FIG. 2 to FIG. 9 are obtained through division based on functions. In actual application, there may be another division manner. For example, the intelligent diagnostic application and a remote diagnostic service that are included in the second device 102 may be divided into one functional module.

The following uses an example in which the first device 101 is a vehicle, the second device 102 is a server, and the third device 103 is a mobile phone. FIG. 10 is a schematic flowchart of a vehicle diagnostic method according to an embodiment of this application. As shown in FIG. 10, the method includes the following steps.

S1001: The server sends a diagnostic instruction to a first domain controller unit. Correspondingly, the first domain controller unit receives the diagnostic instruction from the server.

The first domain controller unit may be one or more domain controller units included in the vehicle. The vehicle may include at least one component, and the at least one component includes at least one domain controller unit. It may be understood that functions of a plurality of conventional ECUs may be centralized in a controller with powerful computing power for centralized control. Such a controller may be referred to as a domain controller unit. The domain controller unit may also be understood as an ECU with powerful functions (for example, computing power and resources). For example, the domain controller unit may include but is not limited to one or more of a CDC, a VDC, a mobile data center (Mobile Data Center, MDC), a T-Box, and the like. Optionally, the at least one component may further include at least one conventional ECU.

The diagnostic instruction may be used to initiate diagnostic on a to-be-diagnosed component, and the to-be-diagnosed component may be one or more of the at least one component included in the vehicle. Optionally, the to-be-diagnosed component may be a domain controller unit and/or a conventional ECU.

In some embodiments, an MQTT client may be deployed on the first domain controller unit, and the first domain controller unit may receive the diagnostic instruction from the server based on an MQTT protocol.

In some other embodiments, a second domain controller unit may be used as an MQTT client, and the second domain controller unit may receive the diagnostic instruction from the server based on the MQTT client, and send the received diagnostic instruction to the first domain controller unit. The second domain controller unit may belong to the at least one domain controller unit included in the vehicle, and the second domain controller unit may be a domain controller unit different from the first domain controller unit.

It may be understood that the foregoing embodiments are all described by using an example in which the domain controller unit in the vehicle receives the diagnostic instruction from the server based on the MQTT protocol. In another embodiment, the domain controller unit in the vehicle may receive the diagnostic instruction from the server based on another protocol.

In some embodiments, the server may perform step S1001 and subsequent steps based on an operation of operation and maintenance personnel. For example, the operation and maintenance personnel may log in to a system corresponding to a remote diagnostic service in the server, enter a vehicle identification number (vehicle identification number, VIN) of the vehicle, and initiate diagnostic on the vehicle. After receiving the operation of the operation and maintenance personnel, in response to the operation, the server may determine an IP address of the vehicle based on the VIN of the vehicle, and deliver the diagnostic instruction to the vehicle based on the IP address. Correspondingly, the vehicle may receive the diagnostic instruction through the first domain controller unit.

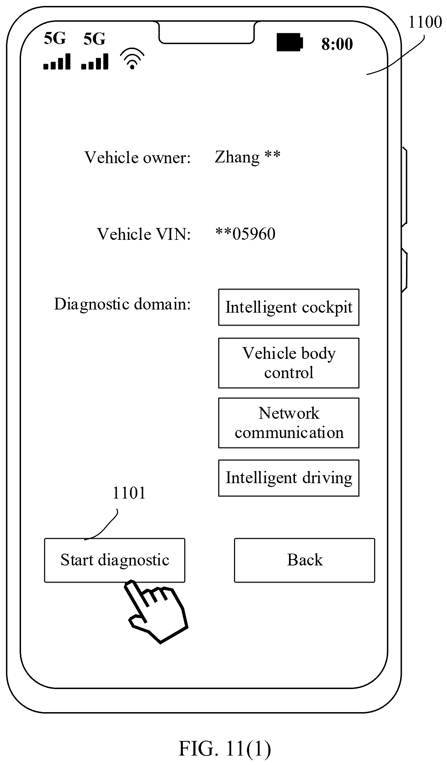

In some other embodiments, the server may receive a user instruction from the mobile phone. In response to the user instruction, the server may perform step S1001 and subsequent steps. For example, an application for triggering vehicle diagnostic may be installed in the mobile phone, and the user may trigger vehicle diagnostic through the application. For example, FIG. 11(1) to FIG. 11(3) are a diagram of interfaces of the mobile phone according to an embodiment of this application.

As shown in FIG. 11(1), the mobile phone may display an application interface 1100. The application interface 1100 may include a button (or referred to as a control or the like) for triggering vehicle diagnostic, for example, a start diagnostic button 1101. The mobile phone detects a trigger operation performed by the user on the start diagnostic button 1101. In response to the operation, the mobile phone sends, to the server, an instruction instructing to diagnose the vehicle. Correspondingly, after receiving the instruction from the mobile phone, the server delivers a diagnostic instruction to the vehicle based on the instruction.

Optionally, one or more pieces of information such as the VIN of the vehicle, owner information, and a diagnostic domain (for example, an intelligent cockpit, vehicle body control, network communication, or intelligent driving) may be further displayed on the application interface 1100. The mobile phone may further send the information to the server, so that the server determines specific to-be-diagnosed components in a specific vehicle.

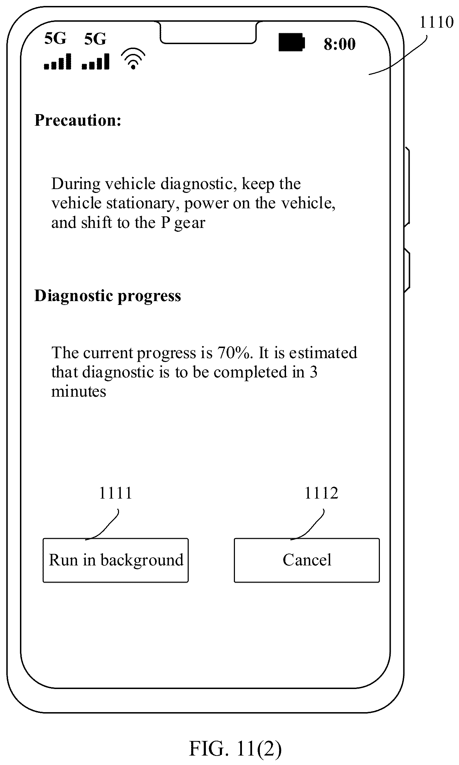

Optionally, in a vehicle diagnostic process, the mobile phone may further present an application interface 1110 shown in FIG. 11(2), to help the user determine progress of diagnostic on the vehicle (for example, "The current progress is 70%. It is estimated that diagnostic is to be completed in 3 minutes"), a precaution (for example, "During vehicle diagnostic, keep the vehicle stationary, power on the vehicle, and shift to the P gear"), and the like. The application interface 1110 may further include one or more of a run in background button 1111, a cancel button 1112, and the like. The run in background button 1111 may be used to execute a vehicle diagnostic process in the background. This avoids affecting use of the mobile phone by the user. The cancel button 1112 may be used to cancel vehicle diagnostic.

In some other embodiments, the server may further periodically or regularly initiate diagnostic on the vehicle actively, and then perform step S1001 and subsequent steps based on an initiation operation of the server. It may be understood that an occasion at which the server initiates diagnostic on the vehicle is not limited in this embodiment of this application.

S1002: The first domain controller unit obtains to-be-diagnosed data for the to-be-diagnosed component based on the diagnostic instruction.

The to-be-diagnosed data is used to diagnose the to-be-diagnosed component.

In some embodiments, the to-be-diagnosed data may include at least one type of a controller area network (controller area network, CAN) snapshot, a log file, and a trouble code. Optionally, when the to-be-diagnosed component is a domain controller unit, the to-be-diagnosed data may include at least one type of a CAN snapshot and a log file. In this way, to-be-diagnosed data for the domain controller unit, for example, the CAN snapshot and the log file, is collected, and a software fault, a performance reliability problem, and the like of the domain controller unit can be diagnosed by analyzing the files. For example, if the domain controller unit of the vehicle has a problem of slow internet access, it is determined, through analysis by collecting the CAN snapshot, the log file, and the like that include various information such as a network rate, a network standard, and a chip parameter of the domain controller unit, that slow internet access is caused by parameter setting. In this way, a specific cause of slow internet access can be determined through diagnostic.

When the to-be-diagnosed component is a conventional ECU, the to-be-diagnosed data may be a trouble code. In this way, a hardware fault of the conventional ECU can be diagnosed. In addition, for different types of to-be-diagnosed components, different types of to-be-diagnosed data are obtained, so that different types of components can be diagnosed.

The CAN snapshot may be generated based on collected CAN data. In this way, original CAN data is not uploaded to the server, but the generated CAN snapshot is uploaded to the server. This can reduce a communication bandwidth of the vehicle and reduce signaling overheads.

In some embodiments, the log file may include one or more of a system log and a dotting log. The system log is used to record running information (or referred to as a running log) of a running event of a software system of the to-be-diagnosed component. The dotting log is used to record information about a fault event that occurs in the software system of the to-be-diagnosed component in a running process, and may represent a record during occurrence of the fault, a status of the to-be-diagnosed component, and the like. Optionally, because the conventional ECU has no log file, and the domain controller unit has a log file, the to-be-diagnosed component in a part related to log descriptions may be the to-be-diagnosed domain controller unit. This is uniformly described herein.

For example, the fault event may include but is not limited to a fault event that may be included in various scenario-type faults such as a software fault, a process overflow, performance monitoring, and network detection. The scenario-type fault may be a fault scenario that is obtained through division based on factors such as a fault type and a fault field and that corresponds to a fixed diagnostic procedure, for example, a power loss fault scenario. Optionally, one scenario-type fault may include one or more different fault events. In other words, one scenario-type fault may correspond to one or more different dotting logs. In this way, when a scenario-type fault occurs, the vehicle can be quickly diagnosed based on a dotting log corresponding to the scenario-type fault.

In some embodiments, the dotting log may use a preset encapsulation format. In this way, logs for recording fault events that occur in the to-be-diagnosed component all use a unified format, so that various data such as whether a fault occurs, a frequency of occurrence, and key information during occurrence can be quickly identified. This helps analyze a vehicle fault and improve diagnostic efficiency.

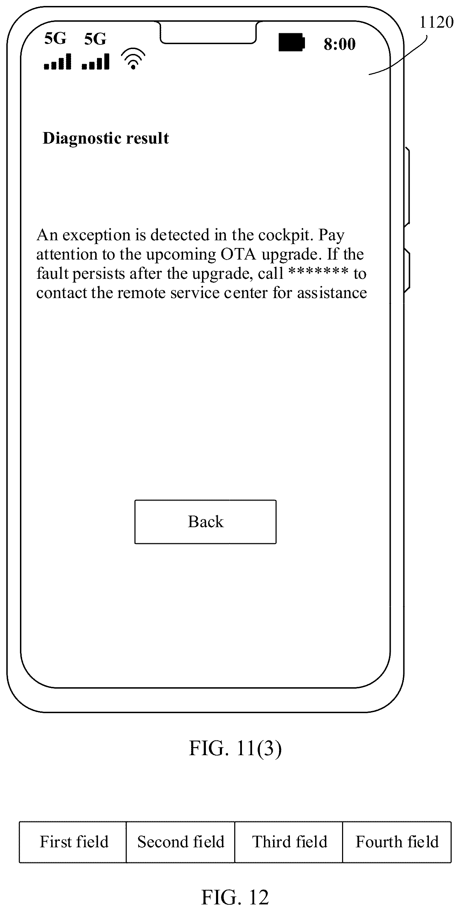

For example, FIG. 12 is a diagram of a structure of the preset encapsulation format according to an embodiment of this application. As shown in FIG. 12, the preset encapsulation format includes a first field, a second field, a third field, and a fourth field. The first field may be used to store an identifier of the to-be-diagnosed component, and the first field may be used as a packet header. The second field may be used to store an identifier of a dotting log. Optionally, the identifier of the dotting log may be globally unique. The third field may be used to store occurrence time of a fault event recorded in the dotting log, and the fourth field may be used to store the fault event. Optionally, the fourth field may use a key (key)-value (value) format, or may use another format. In this way, the preset encapsulation format uses a JSON structure, so that when the vehicle is diagnosed, operation and maintenance personnel can easily understand and analyze the to-be-diagnosed data.

Based on the foregoing technical solution, the domain controller unit in the vehicle may receive, from the server, the diagnostic instruction used to initiate diagnostic on the to-be-diagnosed component in the vehicle, and then the domain controller unit may obtain the to-be-diagnosed data for the to-be-diagnosed component based on the diagnostic instruction. The to-be-diagnosed data may be used to diagnose the to-be-diagnosed component. For example, the to-be-diagnosed component may be a to-be-diagnosed domain controller unit. This enables diagnosis of the domain controller unit in the vehicle, resolving problems that it is difficult to diagnose a software fault, a performance reliability problem, and the like of the domain controller unit in the vehicle by reading a trouble code, a data stream, and the like.

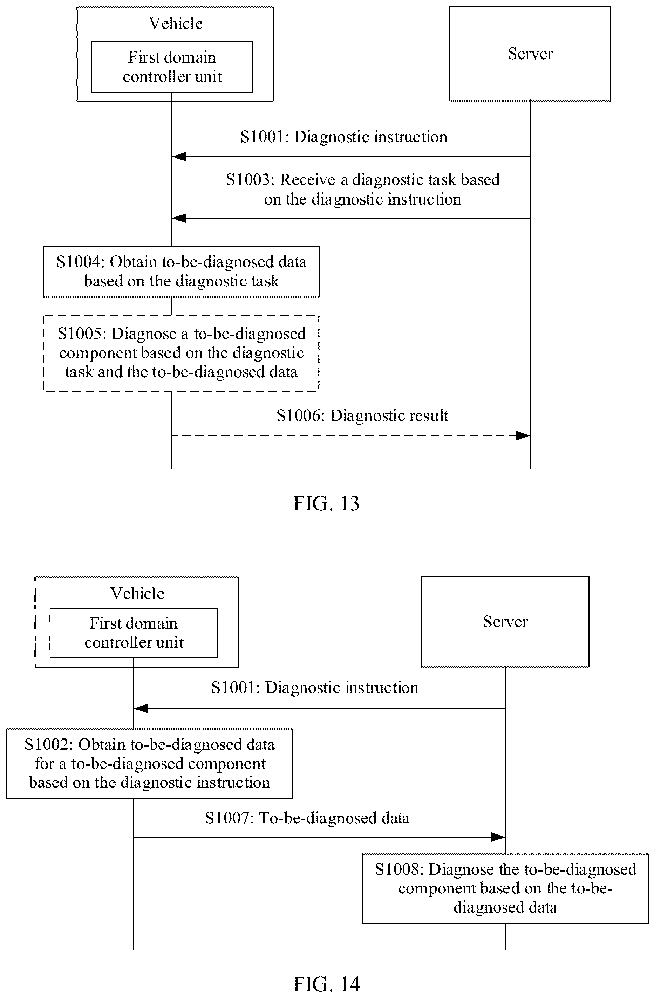

In some embodiments, the first domain controller unit has a diagnostic function, and the diagnostic instruction may specifically instruct the first domain controller unit to initiate diagnostic on the vehicle. Optionally, the diagnostic function of the first domain controller unit may be implemented through the intelligent diagnostic application deployed on the first domain controller unit. For descriptions of the intelligent diagnostic application, refer to the foregoing descriptions. In this embodiment, step S1002 shown in FIG. 10 may be specifically implemented as step S1003 and step S1004 shown in FIG. 13.

S1003: The first domain controller unit receives a diagnostic task from the server based on the diagnostic instruction.

For specific implementation of receiving the diagnostic task based on the diagnostic instruction, refer to related implementation shown in FIG. 2.

Optionally, in this embodiment, the diagnostic task may indicate one or more of a specific component on which diagnostic is to be performed, specific to-be-diagnosed data that is to be obtained, and a diagnostic procedure used for diagnostic.

S1004: The first domain controller unit obtains the to-be-diagnosed data based on the diagnostic task.

Optionally, in this embodiment, the diagnostic task carries one or more of the identifier of the to-be-diagnosed component, a to-be-diagnosed indicator item, a diagnostic type, an identifier of a diagnostic procedure, and a time period in which the to-be-diagnosed data is located. The first domain controller unit may obtain the to-be-diagnosed data based on the one or more of the identifier of the to-be-diagnosed component, the to-be-diagnosed indicator item, the time period in which the to-be-diagnosed data is located, and the like carried in the diagnostic task.

In some embodiments, when the to-be-diagnosed component is a conventional ECU, the diagnostic task may carry only the identifier of the to-be-diagnosed component. When the to-be-diagnosed component is a domain controller unit, the diagnostic task may carry a plurality of the identifier of the to-be-diagnosed component, a to-be-diagnosed indicator item, a diagnostic type, an identifier of a diagnostic procedure, and a time period in which the to-be-diagnosed data is located.

The identifier of the to-be-diagnosed component may be used by the first domain controller unit to determine which component is the to-be-diagnosed component, that is, to determine a specific component on which diagnostic is to be performed. The to-be-diagnosed indicator item may be used by the first domain controller unit to determine specific to-be-diagnosed indicator items. For example, the indicator item may include but is not limited to indicators such as a central control screen freeze, camera unavailability, a loudspeaker power amplifier, a battery problem, a network speed, a process breakdown, a disk flushing failure, and a memory overflow, that may be related to a fault. The time period in which the to-be-diagnosed data is located may be used to determine, by the first domain controller unit, to perform diagnostic on data in a specific time period. For example, the time period may be a time period adjacent to time at which the fault occurs.

In some embodiments, the diagnostic type may be used to determine whether human-machine interaction is required in a process of diagnosing the to-be-diagnosed component. For example, if the diagnostic type is user experience-type fault diagnostic, it may be determined that human-machine interaction is required in the process of diagnosing the to-be-diagnosed component. In this case, the vehicle may interact with the user through a human-machine interaction port. For example, the human-machine interaction port is a central control screen. The vehicle may display an authorization box on the central control screen, and output a corresponding check item after obtaining authorization of the user through the authorization box. For example, if the check item is sound, the user may be guided to play an audio segment, and whether the user hears the audio is determined, to obtain an operation record and an operation result of the user.

If the diagnostic type is not user experience-type fault diagnostic, for example, scenario-type fault diagnostic or log-type fault diagnostic, it may be determined that human-machine interaction is not required in the process of diagnosing the to-be-diagnosed component.

The identifier of the diagnostic procedure may be used by the first domain controller unit to determine to perform diagnostic based on various diagnostic procedures. In some examples, the first domain controller unit may search the diagnostic database shown in FIG. 9 for the corresponding diagnostic procedure based on the received identifier of the diagnostic procedure. If the diagnostic procedure is found, a subsequent diagnostic operation is performed based on the found diagnostic procedure. If the diagnostic procedure is not found, the first domain controller unit may obtain the corresponding diagnostic procedure from the server based on the received identifier of the diagnostic procedure, and then perform a subsequent diagnostic operation based on the obtained diagnostic procedure.

In some embodiments, the diagnostic procedure specifies only a sequence of indicator items of a component that needs to be diagnosed for processing a fault, but does not specify whether human-machine interaction is required in a process of diagnosing the component. For example, for a fault, six indicator items of three domain controller units (for example, a domain controller unit 1, a domain controller unit 2, and a domain controller unit 3) need to be detected. Two indicator items of each domain controller unit, for example, an indicator item 1 and an indicator item 2 of the domain controller unit 1, an indicator item 3 and an indicator item 4 of the domain controller unit 2, and an indicator item 5 and an indicator item 6 of the domain controller unit 3, need to be detected. In step 1, the indicator item 1 of the domain controller unit 1 needs to be detected. In step 2, the indicator item 4 of the domain controller unit 2 needs to be detected. In step 4, the indicator item 5 of the domain controller unit 3 needs to be detected. The rest may be deduced by analogy, until all the indicator items of the to-be-detected domain controller units are detected. The foregoing diagnostic steps are the diagnostic procedure.

Optionally, in this embodiment, the diagnostic task may carry both the diagnostic type and the diagnostic procedure.

In some other embodiments, the diagnostic procedure not only specifies a sequence of indicator items of a component that needs to be diagnosed for processing a fault, but also specifies whether human-machine interaction is required in a process of diagnosing the to-be-diagnosed component, how to perform human-machine interaction, and the like. For example, three indicator items of two domain controller units (a domain controller unit 4 and a domain controller unit 5) need to be detected, to diagnose a fault. An indicator item A and an indicator item B of the domain controller unit 4 and an indicator item C of the domain controller unit 5 need to be detected. In step 1, the indicator item A of the domain controller unit 4 needs to be detected. When the indicator item A is detected, a pop-up window needs to be displayed, to obtain user authorization, the indicator item A needs to be displayed, and an operation record and an operation result of the user are obtained. In step 2, the indicator item C of the domain controller unit 5 needs to be detected. Human-machine interaction is not required during detection of the indicator item C. The rest may be deduced by analogy. The foregoing diagnostic steps are the diagnostic procedure. In this embodiment, the to-be-diagnosed component may be diagnosed based on only the diagnostic procedure.

In this embodiment, the diagnostic type may correspond to the diagnostic procedure represented the identifier of the diagnostic procedure. Different diagnostic types may correspond to different diagnostic procedures. For example, if the diagnostic type is user experience-type fault diagnostic, the diagnostic procedure includes a human-machine interaction process. If the diagnostic type is not user experience-type fault diagnostic, the diagnostic procedure may not include a human-machine interaction process.

Optionally, in this embodiment, the diagnostic task may carry only one of the diagnostic type and the identifier of the diagnostic procedure.

In some embodiments, after the first domain controller unit performs step S1004, the method shown in FIG. 13 may further include step S1005 and step S1006.

S1005: The first domain controller unit diagnoses the to-be-diagnosed component based on the diagnostic task and the to-be-diagnosed data.

Optionally, the first domain controller unit may determine a specific diagnostic process based on the diagnostic procedure, the diagnostic type, and the like that are carried in the diagnostic task, and analyze the to-be-diagnosed data by using the diagnostic process, to diagnose the to-be-diagnosed component.

In some embodiments, for log files of different types included in the to-be-diagnosed data, the first domain controller unit may use different analysis strategies. For example, the log file is a dotting log. The first domain controller unit may analyze the dotting log based on the diagnostic procedure. For example, the first domain controller unit determines whether an indicator item in the dotting log meets a corresponding threshold condition, and determines whether a corresponding fault occurs. Because a format of the dotting log is unified, the dotting log may be parsed to obtain data. In this way, the vehicle can quickly complete diagnostic. Optionally, when the diagnostic type is scenario-type fault diagnostic, the obtained log file is a dotting log. Because a format of the dotting log is unified, quick diagnostic of a scenario-type fault can be implemented. Certainly, in this embodiment, the vehicle may alternatively upload the dotting log to the server for analysis. This is not limited in embodiments of this application.

For example, the log file is a system log. The first domain controller unit may upload the system log to the server, and the server or the operation and maintenance personnel analyze the system log based on the diagnostic procedure. Because the system log is a running log, and a format of the system log is not unified, data cannot be obtained through parsing. Therefore, it is difficult for the vehicle to analyze the log, and the vehicle may choose to upload the log to the server for search and analysis by the operation and maintenance personnel. Optionally, when the diagnostic type is log-type fault diagnostic, the obtained log file is a system log. In this way, diagnostic of the log fault can be implemented.

S1006: The first domain controller unit sends the diagnostic result to the server.

In some embodiments, the first domain controller unit may further send the obtained to-be-diagnosed data to the server. The server may verify the diagnostic result from the vehicle based on the received to-be-diagnosed data, diagnostic result, and the like, to determine accuracy of the diagnostic result from the vehicle.

In some other embodiments, the server has a diagnostic function. Optionally, the diagnostic function of the server may be implemented through the intelligent diagnostic application deployed on the server. The intelligent diagnostic application may be configured to diagnose the to-be-diagnosed component based on the to-be-diagnosed data.

For descriptions of other steps shown in FIG. 13, refer to the descriptions of the steps corresponding to FIG. 10.

In this embodiment, the diagnostic instruction in step S1001 may directly carry content in the diagnostic task. For example, the diagnostic instruction may carry one or more of the identifier of the to-be-diagnosed component, the to-be-diagnosed indicator item, and the time period in which the to-be-diagnosed data is located. For descriptions of these parameters, refer to the foregoing descriptions. Certainly, the diagnostic instruction may alternatively directly carry a diagnostic identifier. Correspondingly, after receiving the diagnostic identifier, the vehicle may determine specific data that is of a specific component and that needs to be uploaded, and the like.

For example, Table 1 shows an example of the diagnostic instruction provided in this embodiment of this application.

**Table 1**

| |
|---|
| ```
 {
 "msgHdr": {
 "protVer": "1",
 "deviceID": "12346649994",
 "timestamp": 1547795847488,
 "srvType": "REMOTE_MAINT",
 "msgType": "GET_LOG",
 "transID": "123456789012345678"
 },
 "data": {
 "compID": "TBOX",
 "fileType": "SYSLOG",
 "relatedId": "123456789012345678",
 "logStartTime": 1587366848,
 "logEndTime": 1587366848
 }
``` |

As shown in Table 1, "compID" indicates the identifier of the to-be-diagnosed component, "fileType" indicates a log type, and "logStartTime" and "logEndTime" respectively indicate start time and end time of a log.

In this embodiment, the steps shown in FIG. 10 may further include step S1007 and step S1008 shown in FIG. 14.

S1007: The first domain controller unit sends the to-be-diagnosed data to the server. Correspondingly, the server receives the to-be-diagnosed data from the first domain controller unit.

In some embodiments, the first domain controller unit may be the to-be-diagnosed component. In other words, when the server performs a diagnostic operation, the to-be-diagnosed component on the vehicle end may directly send the to-be-diagnosed data for the to-be-diagnosed component to the server.

S1008: The server diagnoses the to-be-diagnosed component based on the to-be-diagnosed data.

Optionally, the server may determine the specific diagnostic process based on the diagnostic procedure, the diagnostic type, or the like, and analyze the to-be-diagnosed data by using the diagnostic process, to diagnose the to-be-diagnosed component.

For descriptions of other steps shown in FIG. 14, refer to the descriptions of the steps corresponding to FIG. 10.

Based on the foregoing technical solution, the server diagnoses the component on the vehicle end based on the data that is of the to-be-diagnosed component and that is obtained from the vehicle end. This can simplify development on the vehicle end.

In some embodiments, after diagnostic on the vehicle is completed and the diagnostic result is obtained, the server may further deliver the diagnostic result to a mobile phone. Correspondingly, after receiving the diagnostic result, the mobile phone may further output the diagnostic result. For example, FIG. 10 is a diagram of an interface of the diagnostic result output by the mobile phone according to an embodiment of this application. As shown in FIG. 11(3), the mobile phone may display the diagnostic result of the vehicle by using an application interface 1120 or the like.

The foregoing mainly describes the solutions provided in embodiments of this application from the perspective of the methods. It may be understood that, to implement the foregoing functions, the vehicle diagnostic apparatus includes a corresponding hardware structure and/or software module for performing each of the functions. With reference to the units and algorithm steps described in embodiments disclosed in this application, embodiments of this application can be implemented in a form of hardware or hardware and computer software. Whether a function is performed by hardware or hardware driven by a computer depends on particular applications and design constraints of the technical solutions. A person skilled in the art may use different methods to implement the described functions for each particular application, but it should not be considered that the implementation goes beyond the scope of the technical solutions in the embodiments of this application.

In embodiments of this application, the vehicle diagnostic apparatus may be divided into function modules based on the foregoing method examples. For example, each function module may be obtained through division based on each function, or two or more functions may be integrated into one processing unit. The integrated unit may be implemented in a form of hardware, or may be implemented in a form of software functional module. It should be noted that, in embodiments of this application, unit division is an example, and is merely logical function division. In an actual implementation, another division manner may be used.

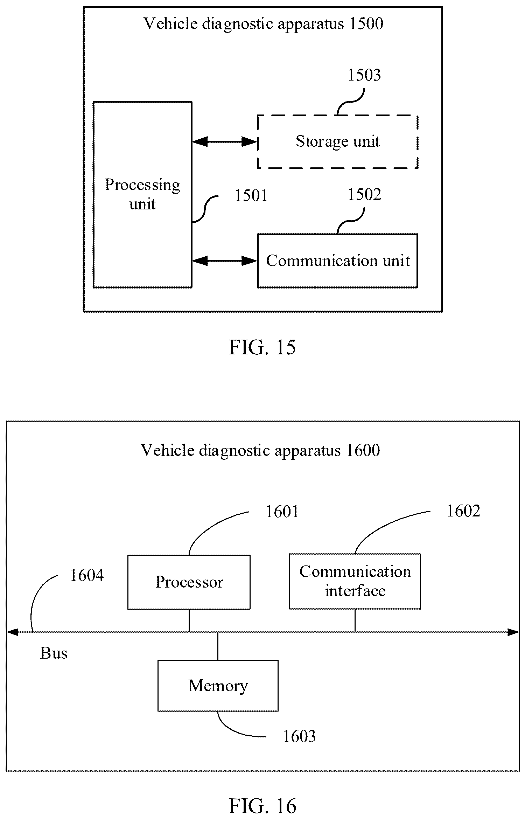

FIG. 15 is a diagram of a structure of a vehicle diagnostic apparatus according to an embodiment of this application. The vehicle diagnostic apparatus 1500 may be configured to implement the methods recorded in the foregoing method embodiments. For example, the vehicle diagnostic apparatus 1500 may specifically include a processing unit 1501 and a communication unit 1502.

In a possible example, the vehicle diagnostic apparatus 1500 is a vehicle, or a module (for example, a chip) used in a vehicle. The processing unit 1501 is configured to support the vehicle diagnostic apparatus 1500 in performing the processing function performed by the vehicle in any one of FIG. 1 to FIG. 14. The communication unit 1502 is configured to support the vehicle diagnostic apparatus 1500 in performing the communication function performed by the vehicle in any one of FIG. 1 to FIG. 14.

In another possible example, the vehicle diagnostic apparatus 1500 is a server, or a module (for example, a chip) used in a server. The processing unit 1501 is configured to support the vehicle diagnostic apparatus 1500 in performing the processing function performed by the server in any one of FIG. 1 to FIG. 14. The communication unit 1502 is configured to support the vehicle diagnostic apparatus 1500 in performing the communication function performed by the server in any one of FIG. 1 to FIG. 14.

Optionally, the vehicle diagnostic apparatus 1500 shown in FIG. 15 may further include a storage unit 1503. The storage unit 1503 stores a program or instructions. When the processing unit 1501 executes the program or the instructions, the vehicle diagnostic apparatus 1500 shown in FIG. 15 is enabled to perform the method in the foregoing method embodiments.

Optionally, the vehicle diagnostic apparatus 1500 shown in FIG. 15 may further include an input/output unit (not shown in the figure). The input/output unit may be configured to provide a human-machine interaction port to implement human-machine interaction.

For technical effects of the vehicle diagnostic apparatus 1500 shown in FIG. 15, refer to the technical effects described in the foregoing method embodiments. Details are not described herein again.

The processing unit 1501 may be a processor or a controller, for example, may be a CPU, a general-purpose processor, an application-specific integrated circuit (application-specific integrated circuit, ASIC), a field programmable logic gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor.

The communication unit 1502 may be a communication interface, a transceiver, a transceiver circuit, or the like. The communication interface is a general term, and in a specific implementation, the communication interface may include a plurality of interfaces.

The storage unit 1503 may be a memory.

When the processing unit 1501 is a processor, the communication unit 1502 is a communication interface, and the storage unit 1503 is a memory, the vehicle diagnostic apparatus in this embodiment of this application may be a vehicle diagnostic apparatus 1600 shown in FIG. 16.

Refer to FIG. 16. The vehicle diagnostic apparatus 1600 includes a processor 1601, a communication interface 1602, and a memory 1603. Optionally, the vehicle diagnostic apparatus 1600 may further include a bus 1604. The communication interface 1602, the processor 1601, and the memory 1603 may be connected to each other through the bus 1604. The bus 1604 may be a peripheral component interconnect (peripheral component interconnect, PCI) bus, an extended industry standard architecture (extended industry standard architecture, EISA) bus, or the like. The bus 1604 may be classified into an address bus, a data bus, a control bus, and the like. For ease of representation, only one bold line is used in FIG. 16 for representation, but this does not mean that there is only one bus or only one type of bus.

Optionally, an embodiment of this application further provides a computer program product carrying computer instructions. When the computer instructions are run on a computer, the computer is enabled to perform the method described in the foregoing embodiment.

Optionally, an embodiment of this application further provides a computer-readable storage medium. The computer-readable storage medium stores computer instructions. When the computer instructions are run on a computer, the computer is enabled to perform the method described in the foregoing embodiment.

Optionally, an embodiment of this application further provides a chip system. The chip system includes at least one processor and at least one interface circuit. The at least one interface circuit is configured to: perform a transceiver function, and send instructions to the at least one processor. When the at least one processor executes the instructions, the at least one processor performs the methods described in the foregoing embodiments.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A vehicle diagnostic method, applied to a vehicle comprising at least one component, wherein the at least one component comprises at least one domain controller unit, and the method comprises:
receiving, by a first domain controller unit, a diagnostic instruction from a server, wherein the first domain controller unit belongs to the at least one domain controller unit, the diagnostic instruction is used to initiate diagnostic on a to-be-diagnosed component, and the to-be-diagnosed component is one or more of the at least one component; and
obtaining, by the first domain controller unit, to-be-diagnosed data for the to-be-diagnosed component based on the diagnostic instruction, wherein the to-be-diagnosed data is used to diagnose the to-be-diagnosed component.

2. The method according to claim 1, wherein the first domain controller unit has a diagnostic function, and the diagnostic instruction instructs the first domain controller unit to initiate diagnostic on the vehicle; and
obtaining, by the first domain controller unit, the to-be-diagnosed data for the to-be-diagnosed component based on the diagnostic instruction comprises:
receiving, by the first domain controller unit, a diagnostic task from the server based on the diagnostic instruction; and
obtaining, by the first domain controller unit, the to-be-diagnosed data based on the diagnostic task.

3. The method according to claim 2, wherein the diagnostic task carries one or more of an identifier of the to-be-diagnosed component, a to-be-diagnosed indicator item, a diagnostic type, an identifier of a diagnostic procedure, and a time period in which the to-be-diagnosed data is located.

4. The method according to claim 2 or 3, wherein after obtaining, by the first domain controller unit, the to-be-diagnosed data based on the diagnostic task, the method further comprises:
diagnosing, by the first domain controller unit, the to-be-diagnosed component based on the diagnostic task and the to-be-diagnosed data; and
sending, by the first domain controller unit, a diagnostic result to the server.

5. The method according to claim 3 or 4, wherein the diagnostic type corresponds to the diagnostic procedure represented by the identifier of the diagnostic procedure.

6. The method according to any one of claims 3 to 5, wherein the diagnostic type is used to determine whether human-machine interaction is required in a process of diagnosing the to-be-diagnosed component.

7. The method according to any one of claims 2 to 6, wherein an intelligent diagnostic application is deployed on the first domain controller unit, and the intelligent diagnostic application is used to implement the diagnostic function.

8. The method according to claim 1, wherein after obtaining, by the first domain controller unit, the to-be-diagnosed data for the to-be-diagnosed component based on the diagnostic instruction, the method further comprises:
sending, by the first domain controller unit, the to-be-diagnosed data to the server, wherein the to-be-diagnosed data is used by the server to diagnose the to-be-diagnosed component.

9. The method according to claim 8, wherein the first domain controller unit is the to-be-diagnosed component.

10. The method according to claim 8 or 9, wherein the diagnostic instruction carries one or more of an identifier of the to-be-diagnosed component, a to-be-diagnosed indicator item, and a time period in which the to-be-diagnosed data is located.

11. The method according to any one of claims 1 to 10, wherein receiving, by the first domain controller unit, the diagnostic instruction from the server comprises:
receiving, by the first domain controller unit, the diagnostic instruction from the server based on an MQTT protocol.

12. The method according to any one of claims 1 to 10, wherein receiving, by the first domain controller unit, the diagnostic instruction from the server comprises:
receiving, by a second domain controller unit, the diagnostic instruction from the server based on an MQTT protocol, wherein the second domain controller unit belongs to the at least one domain controller unit, and the second domain controller unit is different from the first domain controller unit; and
sending, by the second domain controller unit, the diagnostic instruction to the first domain controller unit.

13. The method according to any one of claims 1 to 12, wherein the to-be-diagnosed data comprises at least one type of a CAN snapshot, a log file, or a trouble code.

14. The method according to claim 13, wherein the log file comprises a dotting log, the dotting log is used to record information about a fault event that occurs in a software system of the to-be-diagnosed component in a running process, and the dotting log uses a preset encapsulation format.

15. The method according to claim 14, wherein the preset encapsulation format comprises a first field, a second field, a third field, and a fourth field, the first field is used to store the identifier of the to-be-diagnosed component, the second field is used to store an identifier of the dotting log, the third field is used to store occurrence time of the fault event, and the fourth field is used to store the fault event.

16. The method according to any one of claims 1 to 15, wherein the domain controller unit comprises one or more of a CDC, an MDC, a VDC, and a T-Box.

17. A vehicle diagnostic apparatus, comprising a module configured to perform the steps of the method according to any one of claims 1 to 16.

18. A vehicle diagnostic apparatus, comprising a processor and a memory, wherein the memory is coupled to the processor, the memory is configured to store computer program code, the computer program code comprises computer instructions, and the processor reads the computer instructions from the memory, so that the vehicle diagnostic apparatus performs the method according to any one of claims 1 to 16.

19. A computer-readable storage medium, wherein the computer-readable storage medium comprises a computer program, and when the computer program is run on a vehicle diagnostic apparatus, the vehicle diagnostic apparatus is enabled to perform the method according to any one of claims 1 to 16.

20. A computer program product, wherein the computer program product comprises a computer program or instructions, and when the computer program or the instructions are run on a computer, the computer is enabled to perform the method according to any one of claims 1 to 16.

21. A vehicle, wherein the vehicle comprises the vehicle diagnostic apparatus according to claim 17 or claim 18.
